Europäisches Patentamt

European Patent Office

Office européen des brevets

(11) Publication number: **0 127 197**
A2

## (12) EUROPEAN PATENT APPLICATION

(21) Application number: 84107491.7

(22) Date of filing: 28.08.81

(51) Int. Cl.³: **A 23 L 2/26**
**B 01 F 3/04**

(30) Priority: 10.10.80 GB 8032809
30.03.81 GB 8109914
30.07.81 GB 8123433

(43) Date of publication of application:
05.12.84 Bulletin 84/49

(84) Designated Contracting States:
AT BE CH DE FR GB IT LI LU NL SE

(60) Publication number of the earlier application
in accordance with Art. 76 EPC: 0 047 163

(71) Applicant: Love, James Prince
121 Meetinghouse Lane
Balsall Common Near Coventry, CU7 7GD(GB)

(71) Applicant: Rafique, Syed Omar Zikria Mubarak
Knowle House Knowle Hill Kenilworth
Warwickshire, CV8 2DZ(GB)

(72) Inventor: Love, James Prince
121 Meetinghouse Lane
Balsall Common Near Coventry, CU7 7GD(GB)

(72) Inventor: Rafique, Syed Omar Zikria Mubarak
Knowle House Knowle Hill Kenilworth
Warwickshire, CV8 2DZ(GB)

(74) Representative: Gura, Henry Alan et al,
MEWBURN ELLIS & CO. 2/3 Cursitor Street
London EC4A 1BQ(GB)

(54) Apparatus with fluid pressure relief means.

(57) Fluid pressure apparatus having means for the relief of excess pressure comprising a resilient sealing member (44 or 302 or 322 or 342) urged against the periphery (L) of an opening to seal against said opening and the sealing member displaceable or deformable to relieve excess pressure acting at said opening. In one example, a sealing disc (44) is held against the opening periphery by a spring (34) which allows the pressure force of the disc to move it away from the opening. In another example, a sealing arrangement (302, 314 or 322, 326 or 342, 344) comprises portions of greater flexural compliance that deform to vent the excess pressure.

FIG. 2

EP 0 127 197 A2

Croydon Printing Company Ltd.

FIG.5

FIG.6

# APPARATUS WITH FLUID PRESSURE RELIEF MEANS

This invention relates to apparatus comprising means for the relief of excess fluid pressure in a closed space, such as apparatus for charging liquids (the term "liquids" being here intended to include also emulsions and suspensions) with pressurised gas.

It is an important factor in all apparatus in which high pressures can be generated, such as apparatus intended for general use and in situations where there may be little or no preventive maintenance, one clear instance being consumer-operated apparatus for producing gasified drinks, that the apparatus is safe to operate having regard to the maximum pressures that may be generated. It is therefore customary to provide some form of pressure relief valve, but that may not be sufficient in itself because over an extended period the valve may become defective without it necessarily becoming apparent to the user.

As one example of an apparatus for producing gassified drinks provided with means for relieving excess pressure, GB 1 453 363 describes an apparatus for gasifying liquid in a bottle removable from the apparatus, using gas from a pressurised cylinder. The apparatus is provided with a cam-operated pressure relief mechanism that is operated and freed every time the lip of a bottle of liquid to be aerated is brought into sealing engagement with the pressure gas supply means, so that it is ensured that the mechanism is still operative before pressure is applied and the pressure relief valve will be released if it has previously become stuck through a long period of non-use. This system requires a relatively complex mechanism that is expensive to produce, and moreover, although it ensures the valve mechanism operates, it cannot ensure that pressure relief gas path is not blocked. There may well be solid or gummy residues left in the fluid flow passages of the apparatus from previous use, and if these were to impede or block the escaping gas there still could be a dangerous over-pressure built up even though the valve mechanism itself operates perfectly.

According to one aspect of the present invention, there is provided fluid pressure apparatus having sealing means arranged for the relief of excess pressure from a container, said sealing means comprising support means and a flexible sealing member for sealing contact between the member and the periphery of an opening from the container, the support means supporting the sealing member against said opening, characterised in that the sealing means have a flexural compliance to internal pressure in the container that is non-uniform with respect to the peripheral extent of the region of sealing contact of the sealing member, at least one angular portion of the peripheral extent of the sealing member thereby having a lesser resistance to flexure whereby said at least one portion is deformable to release excess fluid pressure in the container while the sealing member is retained against the periphery of the opening elsewhere around the angular extent of the sealing means.

More particularly, such apparatus may comprise means for the discharge of a pressurising fluid into the container and the container opening for said discharge means utilised for the pressure relief mechanism, the discharge means being disposed centrally with respect to said region of sealing contact.

The novel pressure relief mechanism allows excess pressure to be vented directly into the surroundings without having to pass through lengthy constricted passages that might be susceptible to blockage. Because the relief mechanism works without relying on sliding parts, but simply requires the flexure of a resilient sealing member, it is possible to provide an arrangement which will always vent once the pressure rises above a predetermined level. By choice of suitable materials it can be arranged that deterioration of the flexible sealing member over an extended period, increases the compliance of said angular portion or portions so that the apparatus will simply vent at a lower pressure and in all events a dangerous over-pressure cannot build up.

The variable compliance of the sealing means can be obtained by reducing the thickness of the flexible sealing member over a portion or portions of its extent engaging with the opening periphery, or by providing a support or backing member with a contoured or stepped supporting surface for the flexible sealing member whereby a similar portion or portions of the flexible member will flex first because of the lack of adequate support from the backing member there, or by a combination of such features.

Preferably, the apparatus is arranged so that it is not sensitive to any eccentricity between the opening periphery and the annular sealing means, which might otherwise result in the pressure at which venting occurs varying according to the precise location of the opening with respect to the annular sealing means. This may be accomplished by extending said portion or portions radially of the sealing means. In a preferred arrangement there are at least two radially elongate portions of greater compliance disposed substantially symmetrically about the axis of the annular sealing means.

According to another aspect of the invention, there is provided apparatus for discharging a fluid from a sealed bulb into a liquid in a container, comprising mounting means arranged to permit relative movement of the bulb towards the container, an opening device disposed between the bulb and the container for opening the bulb during said relative movement to permit the fluid to flow into the container to gasify the liquid in the container, said opening device being provided with sealing means for engaging the periphery of an entry opening of the container through which said gas is admitted and biasing means holding said sealing means in engagement with said opening periphery, the fluid pressure in the container acting upon sealing means against said biasing means whereby the sealing means are displaceable away from said opening by an increase of the container pressure over a limiting value to vent excess pressure fluid from the container.

Further details of the invention will be described by way of example with reference to the accompanying drawings, in which:

Fig. 1 is a vertical axial section of one form of apparatus according to the invention,

Figs. 2 and 3 are similar sectional views, to a larger scale, of the shuttle and of the outlet orifice valve respectively of the apparatus in Fig. 1,

Fig. 4 is a plan view from above of the lower casing part of the apparatus in Fig. 1,

Fig. 5 is a side view in half section, illustrating container sealing means for apparatus according to the invention,

Figs. 6 and 7 are opposite end views, seen in the directions X and Y respectively, of the sealing member of the sealing means in Fig. 5,

Figs. 8 and 9 are end and axial sectional views of a flexible sealing member for another sealing means for apparatus according to the invention, and

Figs. 10 and 11 are axial section and end views of a further form of sealing means for apparatus according to the invention.

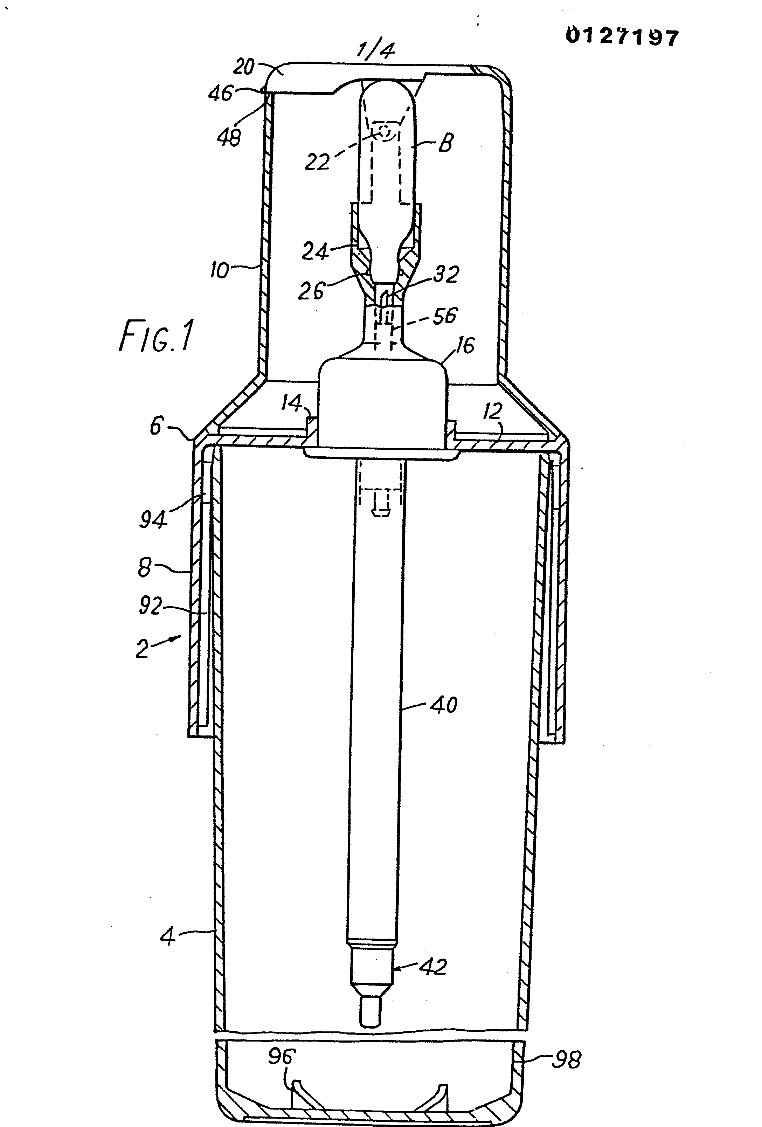

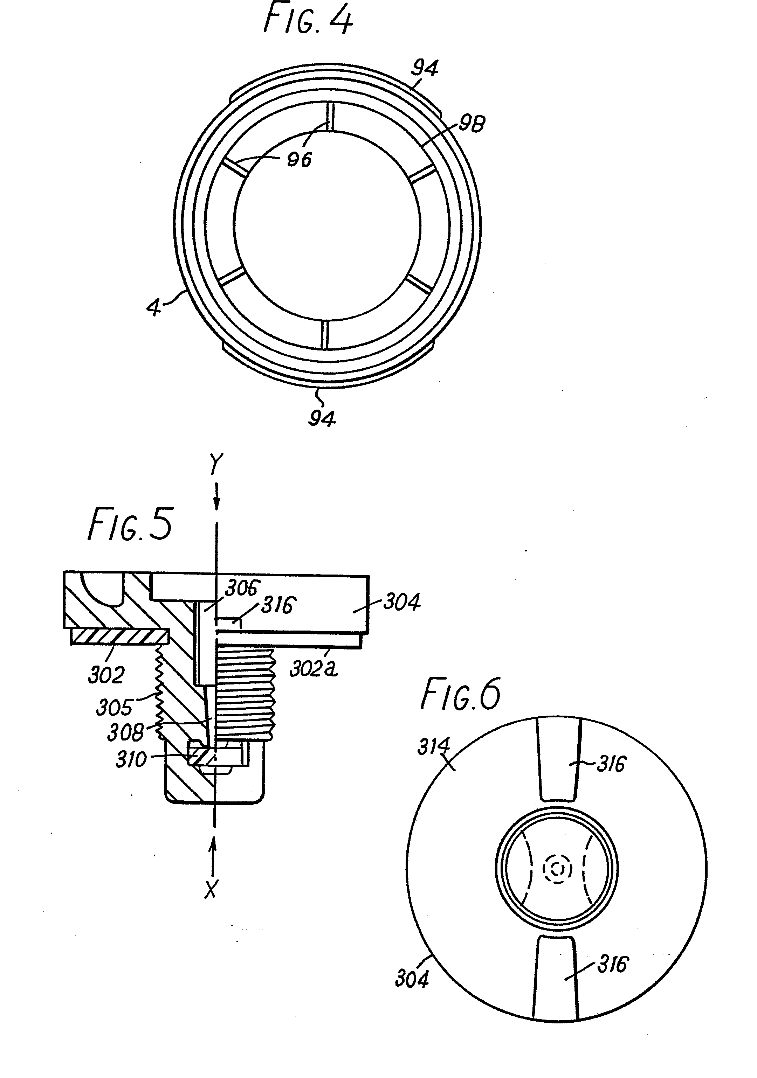

Referring in particular to Figs. 1 to 4 of the drawings, the apparatus comprises an outer casing 2 which provides mounting means for a bottle or other container (not shown) containing a liquid to be carbonated and a carbon dioxide bulb B that itself may be of a conventional form used to produce carbonated drinks domestically, e.g. holding a charge of 8gm liquid carbon dioxide. The bottle is mounted in a lower part 4 of the casing and the bulb B in an upper part 6 that is detachably secured to the lower part by a toothed or threaded arrangement.

The container upper part 6 comprises a cylindrical lower skirt 8 and a top cap 10 abutting the skirt at a peripheral junction and secured thereto by snap ribs (not shown). The lower skirt has a top wall 12 with a flanged central aperture 14 in which a bulb holder 16 for the bulb B is an interference fit, there also being engagement means (not shown) between the top wall and the holder to prevent relative rotation. The top cap 10 has an opening in its top wall that is closed by a pivoting lid 20 attached to the bulb holder 16 through an offset transverse pivot mounting 22. By swinging the lid clockwise from the position shown in Fig. 1, there is access to cup 24 of the bulb holder and the bulb is inserted, with its neck sealingly engaged by an O-ring 26 at the lower end of the cup.

The bulb holder 16 includes a downwardly open cyindrical portion 28 in which there is a sliding shuttle 30 that comprises a hollow needle 32 projecting upwardly from it towards the bulb. The needle is biased away from the bulb by a compression spring 34 acting between the shuttle and the top wall 36 of the holder cylindrical portion. A stop ring 38 at the bottom of the cylindrical portion retains the shuttle within the holder.

The shuttle has a gas expansion tube 40 projecting downwards from it and terminating at an outlet orifice valve 42 near the bottom of the housing lower part to provide a heat transfer conduit for bulb fluid to flow into the bottle of liquid. In use, the tube extends into the bottle, with the neck of the bottle sealed against a sealing disc 44 on the underside of the shuttle, the upper and lower parts of the casing 2 then being so positioned that the bottle forces the shuttle upwards, and therefore the needle also, to pierce the bulb and allow the fluid in the bulb to pass through the expansion tube and be introduced into the bottle as a dry gas to carbonate the liquid there. The bulb B abuts against the pivotable lid 20 which resists the upward force from the bulb and the needle because of its offset pivot mounting 22, bottom edge 46 of the lid and an opposed top edge 48 on the top cap forming an end stop.

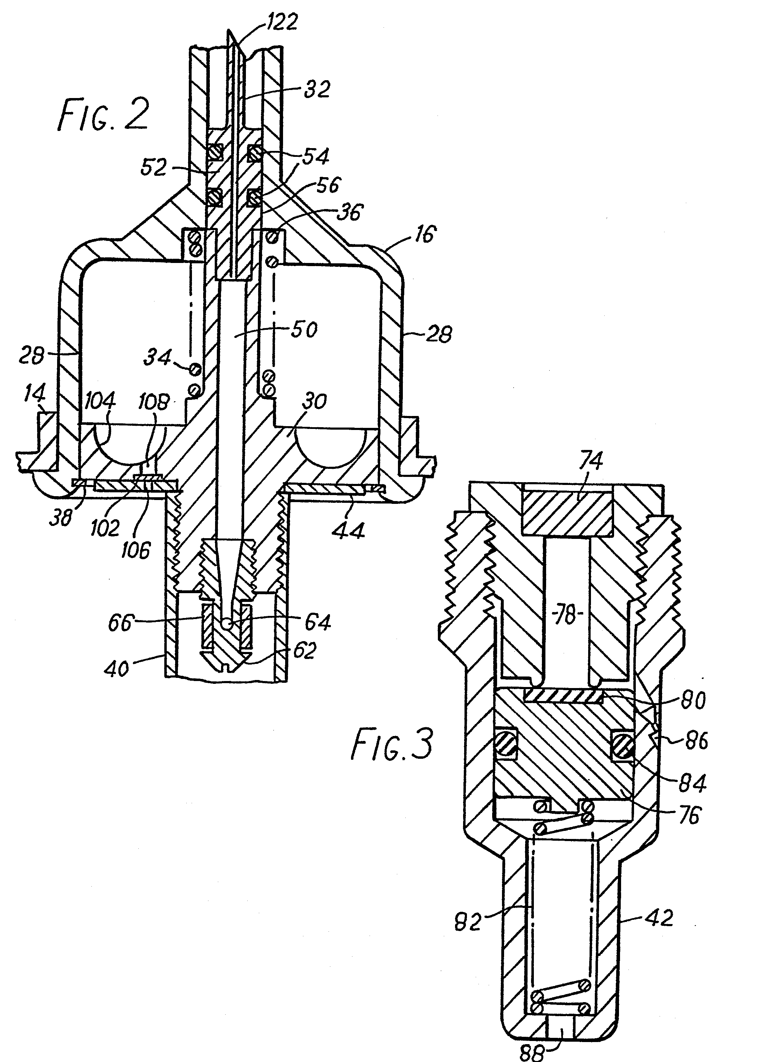

As can be seen in more detail in Fig. 2, the hollow needle 32 communicates with a central passage 50 in the shuttle. The needle is fixed to the main body of the shuttle through its stem 52 provided with two O-rings 54 in series that act both the seal the bulb holder bore 56 in which they slide and also to centralise the needle relative to that bore. The central passage 50 in the shuttle connects the interior bore of the needle to a shuttle plug 62 wherein a transverse exit passage 64 is closed by an elastomeric ring 66 that acts as a non-return valve permitting fluid flow only from the shuttle into the gas expansion tube 40.

The tube is filled with a permeable mass or matrix 68 or material acting as a heat source for evaporation and expansion of the carbon dioxide so that it can be injected into the bottle as a pressurised dry gas flow. The material used is able to transmit the necessary amount of heat very quickly to vaporise the carbon dioxide as it passes through the tube, and it is also able to recover heat from the surroundings relatively fast, as the user may want to repeat the operation every two or three minutes. Generally speaking, a metallic material is suitable and it will preferably be in the form of small particles or filaments providing a multiplicity of small interstitial spaces that form paths through which the fluid flows.

At the exit end of the expansion tube, the outlet orifice valve 42 prevents flow until a certain minimum gas pressure has been established in the tube. Referring to Fig. 3, the gas from the tube reaches the valve through a porous plug 74 that retains the heat yielding matrix 68 in the tube and the gas pressure acts on a valve body 76 through an entry conduit 78 that is of

0127197

smaller diameter than the valve body. A sealing disc 80 on the end face of the body confines the pressure to the smaller areas of the conduit cross-section as long as the valve body is held against the entry conduit by a compression spring 82. Once the gas pressure overcomes the spring bias it acts on the full cross-sectional area of the valve body and the valve therefore snaps open as a predetermined opening pressure is attained.

The rear of the valve body is sealed from the incoming gas pressure by an O-ring 84 and the gas can only escape into the bottle through a nozzle orifice 86 producing a pressure drop above critical value so that there is a choked sonic flow through the orifice breaking up the flow into very small bubbles that disolve more easily.

As the gas pressure builds up in the bottle, it will also act on the rear of the valve body by way of the opening 88 in the lower end of the valve. The valve body is therefore sensitive to the pressure drop across the orifice, and the spring 82 is so arranged that it will only allow the valve to be opened when the resultant gas pressure on the full cross-section of the valve body is above the orifice critical pressure.

As the gas pressure in the bottle builds up to its required value, the rate of solution in the liquid closely approaches the rate of supply of dry gas. Should there be any excess supply of gas, this is able to escape from the top of the bottle because the pressure acting on the shuttle sealing disc 44 at the upper lip of the bottle then causes the shuttle to move against the force of the spring 34, away from the bottle.

The apparatus is adapted to be used with bottles of a range of different heights and diameters, e.g. with capacities of between 750 cc and 1100 cc, with heights of between 250 mm and 320 mm and diameter up to 930 mm. The accommodation of different bottle heights is acheived by the form of screw thread engagement provided between the upper and lower parts of the casing, this comprising groups of teeth forming, on each part, two rack-like screw thread segments 92, 94, as is described in more detail in EP-A-0047163. Containers having different diameters may be used as they will be centred by a series of ribs 96 in the bottom of the casing lower part.

As a further safety feature, a blow-out disc 102 (Fig. 2) of elastomeric material may be mounted on the piston 104 of the shuttle behind a small aperture 106. Behind the blow-out disc 102 there is a larger aperture 108 so that the disc is supported only around its margin. If the shuttle 30 fails to move, at a certain excess pressure the disc 102 will be deformed and driven through the aperture 108 and so leave an open passage for pressure relief.

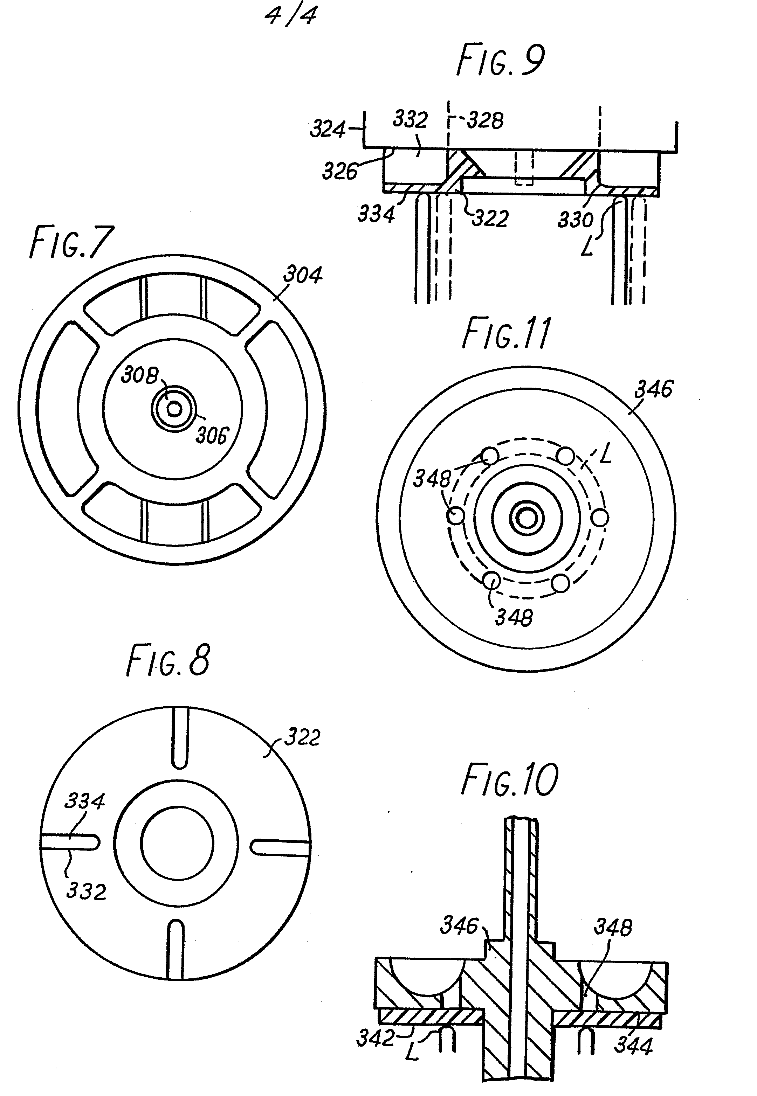

Referring now to Figs. 5 to 7, a preferred form of pressure relief means for apparatus otherwise of the form already described comprises sealing means having a planar annular sealing member 302 of silicone rubber or food quality natural rubber mounted on a rigid backing member 304 that forms a cast or moulded shuttle providing gas throughflow means. Other features of the apparatus are not shown, but as in the previously described embodiment it comprises a casing in which the shuttle is axially slidable in the directions X, Y and is urged in the direction Y by a spring against the open lip of the bottle which is mounted substantially coaxially with the shuttle in the casing, the lip thereby being held in sealing engagement with the end face 302a of the flexible sealing member. In Fig. 5 a screw-threaded section 305 is shown to which the gas expansion tube 40 is secured, and the apparatus also comprises unillustrated means by which, as the sealing engagement is made, a carbon dioxide bulb or capsule is pierced and its contents flow through the central axial passage 306 in the shuttle member to an outlet nozzle 308 where there is a non-return valve 310 and to the bottle, which has previously been filled with water. As in the first-described embodiment, the non-return valve leads to a heat transfer conduit (not shown) where the bulb fluid is expanded to a dry gas as it flows into the bottle.

The supporting surface 314 of the shuttle providing the backing member for the sealing member and through which the sealing pressure between the flexible member and the bottle lip is transmitted, has two opposite radially elongate recesses or slots 316. At these two positions, therefore, the flexible member is unsupported and can move away from the bottle lip. During the gas-charging process, the bottle internal pressure can rise considerably before the gas dissolves in the liquid, and the sealing member will flex at the unsupported portions when the bottle internal pressure rises above some predetermined value, since the slots are themselves open to ambient air pressure. Gas will then be vented from the bottle until the pressure has dropped sufficiently to allow the flexible member to return into full sealing engagement with the bottle lip. By suitable choice of the dimensions and material of the flexible member, and of the dimensions of the slots, the flexural compliance of the unsupported portions in front of the slots 16 can be controlled to set the required safety blow-off pressure.

The gas escapes into free space as soon as it passes the bottle lip, and the seal against the lip is made afresh in each charging operation, of course. There is therefore no risk that an accumulation of foreign matter from previous use will prevent operation of the pressure relief. If the material of the flexible member should be damaged or deteriorate with the passage of time, this will simply result in the unsupported regions flexing at a lower pressure, so that the arrangement has a fail-safe characteristic in this respect.

It will also be seen that the blow-off pressure is independent of the force with which the sealing means is held against the bottle lip, since the sealing member is still held in the same position against the bottle lip while its unsupported portions are flexed by the gas pressure. No complex and sensitive mechanism is required, therefore, and during normal operation it is always possible to provide a secure seal for the charging process.

Figs. 8 and 9 show an alternative flexible sealing member 322 that can be employed with a backing member 324 having a planar supporting surface 326, in an arrangement otherwise similar to that in Figs. 5 to 7. Through the backing member and the flexible member there is a central passage 328 for the injection of gas into the bottle through a non-return valve and a heat exchange conduit as already described, this not being illustrated in any detail. A planar face 330 of the flexible member faces the sealing face of the bottle lip, but at its rear face the member has four equispaced radial recesses 332 which result in there being corresponding thin-walled unsupported portions 334 at the front face. As in the previous example, the unsupported portions are flexurally compliant and can be proportioned so as to allow gas to escape once a certain pressure has been exceeded.

Fig. 9 also illustrates how, even with the bottle lip L eccentric to the sealing means, the pressure relief function of the sealing means is equally effective. It will be apparent from this that the flexural compliance of the reduced thickness portions to the bottle internal gas pressure is dependent on the circumferential extent of those portions but not on the radial position of contact of the bottle lip. It will be understood that a similar effect can be obtained using a single radial recess or slot, although it is preferred to provide two or more angularly spaced recesses or slots as this caters for a greater range of eccentricity within given overall dimensions.

In Figs. 10 to 11 an embodiment of the invention is illustrated similar to the preceding example but in which a planar flexible member 342 is supported by a backing face 344 on a shuttle 346 in which the radial recesses or slots are replaced be an equispaced series of shorter recesses or slots 348 arranged on a pitch circle concentric with the shuttle axis and corresponding to the bottle lip diameter. The areas of the flexible member overlying these slots thus form portions of greater flexural compliance than the remainder of the member. If the bottle lip is located eccentrically on the flexible member, at the opposite diametrical regions of maximum eccentricity the slots will be entirely outside or inside the area encircled by the bottle lip and so not be operative for the relief of the internal bottle pressure, but there is a sufficient number of slots to ensure that one or more of them will substantially coincide radially with the bottle lip L, whatever its eccentricity, and so provide the pressure relief function. Therefore, it is also possible in this case to cope with a considerable radial offset of the bottle relative to the shuttle. In other respects, this embodiment can operate in the manner already described.

CLAIMS:

1.    Fluid pressure apparatus having sealing means arranged for the relief of excess pressure from a container, said sealing means comprising support means and a flexible sealing member for sealing contact between the member and the periphery of an opening from the container, the support means supporting the sealing member against said opening, characterised in that the sealing means have a flexural compliance to internal pressure in the container that is non-uniform with respect to the peripheral extent of the region of sealing contact of the sealing member, at least one angular portion of the peripheral extent of the sealing member thereby having a lesser resistance to flexure whereby said at least one portion is deformable to release excess fluid pressure in the container while the sealing member is retained against the periphery of the opening elsewhere around the angular extent of the sealing means.

2.    Apparatus according to claim 1 comprising means for the discharge of a pressurising fluid into the container disposed centrally with respect to said region of sealing contact.

3.    Apparatuys according to claim 1 or 2 wherein the sealing means is provided with a plurality of peripherally spaced portions of greater compliance.

4.      Apparatus acording to claim 3 wherein said portions of greater compliance are confined to an annular region of the sealing means spaced from its outer edge.

5.      Apparatus according to claim 1 or 2 wherein the sealing means is provided with at least two radially elongate portions of greater compliance disposed substantially symetrically.

6.      Apparatus for discharging a fluid from a sealed bulb into a liquid in a container, comprising mounting means arranged to permit relative movement of the bulb towards the container, an opening device disposed between the bulb and the container for opening the bulb during said relative movement to permit the fluid to flow into the container to gasify the liquid in the container, characterised in that said opening device is provided with sealing means for engaging the periphery of an entry opening of the container through which said gas is admitted, and that biasing means hold said sealing means in engagement with said opening periphery, the fluid pressure in the container acting upon the sealing means against said biasing means whereby the sealing means are displaceable away from said opening by an increase of the container pressure over a limiting value to vent excess pressure fluid from the container.

7.      Apparatus according to claim 6 wherein said biasing means comprise resilient means acting upon the opening device to urge it away from the bulb, whereby the bulb is opened by movement counter to the direction of action of said resilient means.

FIG.1

FIG.2

FIG.3

FIG. 4

94

98

96

4

94

FIG. 5

Y

306  316

304

302

302a

305

308

310

X

FIG. 6

314

316

304

316

FIG.9

FIG.7

FIG.11

FIG.8

FIG.10